# EUROPEAN PATENT SPECIFICATION

(11) **EP 0 869 289 B1**
(45) Date of publication and mention of the grant of the patent: **26.10.2005**
(21) Application number: 98302624.6
(22) Date of filing: 03.04.1998
(51) Int. Cl.: F16C 25/08, F16C 35/073, F16C 23/08

(54) **Mounting of a shaft within a housing with a preloaded bearing**
Montage von einer Welle in ein Gehäuse mit einem vorgespanntem Lager
Montage d'un arbre dans un carter par un palier sous pré-tension

(30) Priority: 04.04.1997 US 833108; 22.07.1997 US 898233
(43) Date of publication of application: 07.10.1998
(73) Proprietor: THE TORRINGTON COMPANY, Torrington, Connecticut 06790 (US)
(72) Inventor: Beaman, Michael D., Torrington, CT 06790 (US)
(74) Representative: Feakins, Graham Allan

(56) References cited:
- GB-A- 2 012 011
- US-A- 4 456 314
- US-A- 4 514 109
- US-A- 5 193 917
- US-A- 5 681 118

## Description

This invention relates generally to the mounting of a rotatable shaft within a housing and, more particularly, to a mounting suitable for a steering column shaft.

Typically, automotive tilt steering columns require a spring preload to eliminate axial free play and a steel tolerance ring to eliminate radial free play. Currently, a steel coil spring or wave type spring is used in combination with a steel or plastic tolerance ring. This mounting arrangement requires a great amount of axial space and introduced variations in torque-to-rotate. Additionally, such mounting arrangements allow transmission of noise and vibration to or from the shaft, through the bearing.

US-A-4 456 314 discloses a known way of mounting an inner bearing ring on a shaft.

According to the present invention, there is provided a method of mounting a shaft within a housing, the method comprising mounting an angular contact bearing within the housing, the angular contact bearing having bearing balls between a bearing outer ring and a bearing inner ring, the annular contact bearing having an axis; and positioning a shaft within the bearing inner ring such that an annular space is provided between the bearing inner ring and the shaft; characterised by positioning a mounting ring formed of elastomeric polymer over the shaft and against the bearing inner ring such that a portion of the mounting ring is within the annular space between the bearing inner ring and the shaft such that the bearing inner ring is spaced from and in a non-contact position relative to the shaft, thereby centring the shaft within the bearing inner ring and reducing radial free play of the shaft with respect to the bearing inner ring; and compressing the mounting ring axially, against the bearing inner ring, such that the mounting ring deforms and resiliently spreads radially outwardly and provides a preload on the bearing balls.

According to another aspect of the present invention, there is provided an assembly comprising a housing, an angular contact bearing having bearing balls between a bearing outer ring and a bearing inner ring, the bearing outer ring being mounted within the housing, the bearing inner ring having a central annular aperture; there being a shaft located concentrically within the central annular aperture of the bearing inner ring such that an annular space is provided between the bearing inner ring and the shaft and there being stop means mounted on the shaft; characterised by a mounting ring, formed of elastomeric polymer, having a portion located within the annular space between the bearing inner ring and the shaft, such that the bearing inner ring is spaced from and in a non-contact position relative to the shaft the mounting ring being compressed axially between the bearing inner ring and the stop means such that the mounting ring is resiliently spread radially outwardly and a preload is exerted on the bearing balls.

For a better understanding of the invention and to show how the same may be carried into effect, reference will now be made, by way of example to the accompanying drawings, in which:-
Fig. 1 is a sectional view of a shaft mounted within a housing illustrating the prior art;
Fig. 2 is a sectional view of a shaft mounted within a housing, illustrating a first embodiment of the present invention;
Fig. 3 is a sectional view of a shaft mounted within a housing, illustrating a second embodiment;
Fig. 4 is a sectional view illustrating an elastomeric polymer mounting ring of the embodiments of Figs. 2 and 3 prior to axial compression of the mounting ring; and
Fig. 5 is a sectional view of a shaft mounted within a housing, illustrating a third embodiment.

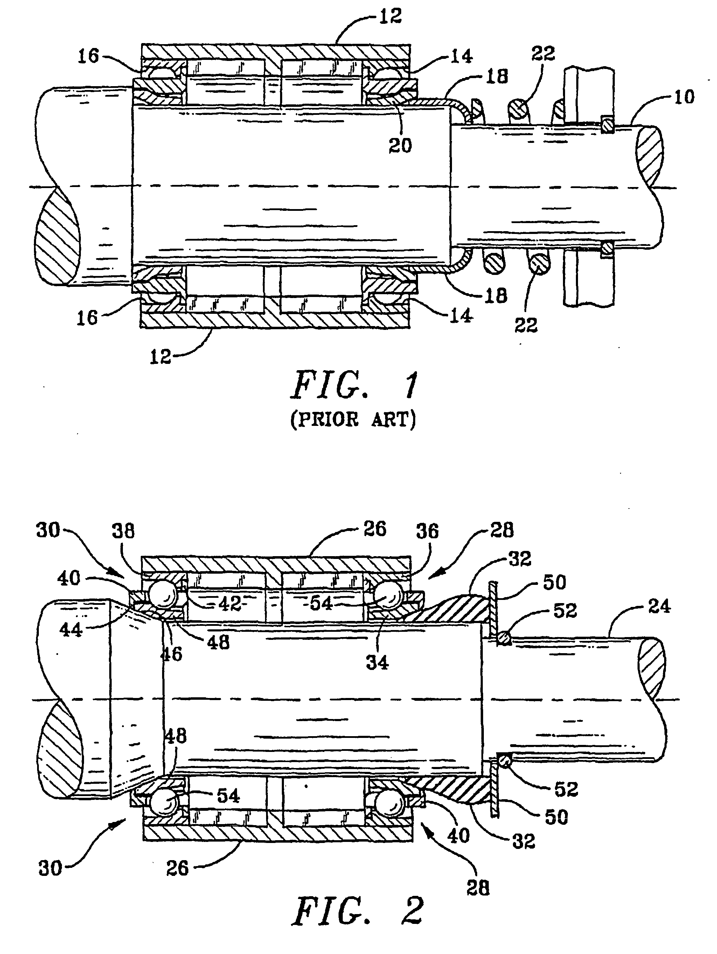

Figure 1 illustrates a shaft 10 mounted within a housing 12 by angular contact bearings 14 and 16. A steel tolerance ring 18 is split or segmented so that it can close radially inwardly against shaft 10 and under a tapered portion of a bearing inner ring 20 of the angular contact bearing 14 to reduce radial free play between the shaft 10 and bearing inner ring 20. Steel coil spring 22 provides an axial preload on the angular contact bearings 14 and 16 by pressing axially against the steel tolerance ring 18.

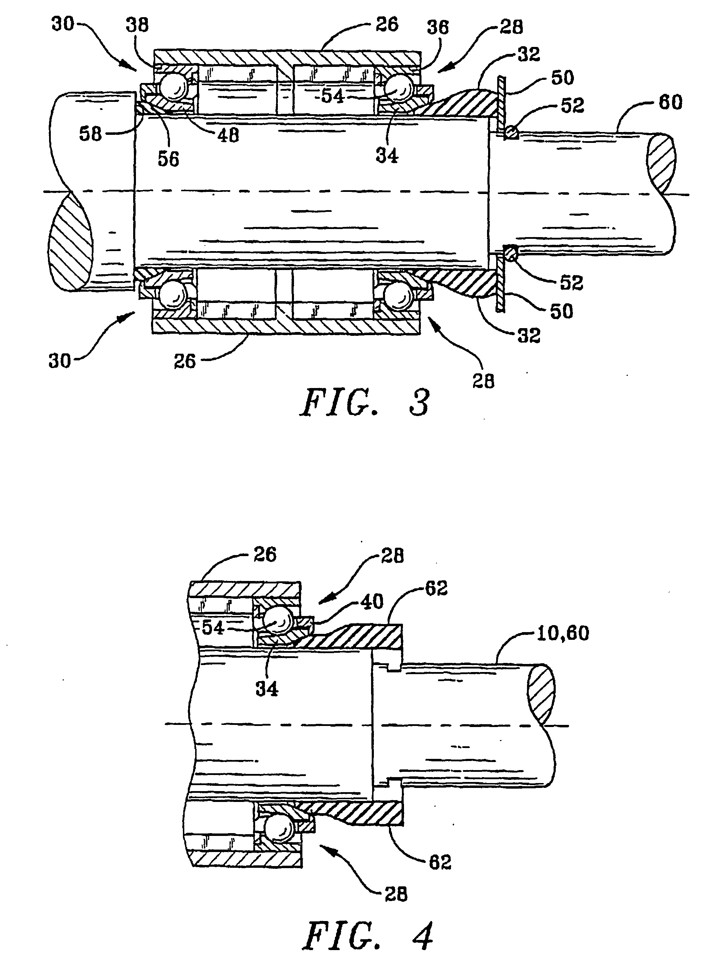

Figure 2 illustrates a first embodiment of the present construction having a shaft 24 mounted within a housing 26 by angular contact bearings 28 and 30 that form a clearance fit with the shaft. A mounting ring 32, formed of an elastomeric polymer, is located against a bearing inner ring 34 of the angular contact bearing 28, such that a wedge-shaped portion of the mounting ring 32 is between the bearing inner ring 34 and shaft 24. As a result of this positioning of the mounting ring 34, radial free play of the shaft is reduced and the shaft is centred and isolated from contact with the housing and bearings, reducing transmission of noise and vibration to or from the shaft.

Preferably, the angular contact bearings 28 and 30 are mounted within the housing 26 before inserting (or sliding) the shaft 24 into position within the bearings. Various mounting means may be used; for example, bearing outer rings 36 and 38 may be press-fit into housing 26 axially inwardly against a shoulder of housing 26. For convenience, angular contact bearings 28 and 30 may include bearing retainers 40 with radially extending flanges or tabs 42 and 44 that hold the bearings together as a subassembly prior to mounting of the shaft 24 and application of a preload.

In the embodiment of Figure 2, the shaft 24 has a radially outwardly tapered annular shoulder 46 that engages a mating tapered inner surface of the bearing inner ring 48 of the angular contact bearing 30. An annular washer 50, held by a snap ring 52, or other stop means compresses the mounting ring 32 axially, against the bearing inner ring 34. As a result of this axial compression, the mounting ring 32 deforms and resiliently spreads radially outwardly and provides a preload on bearing balls 54 of angular contact bearings 28 and 30, acting through the housing 26 and resisted by engagement of the bearing inner ring 48 with annular shoulder 46.

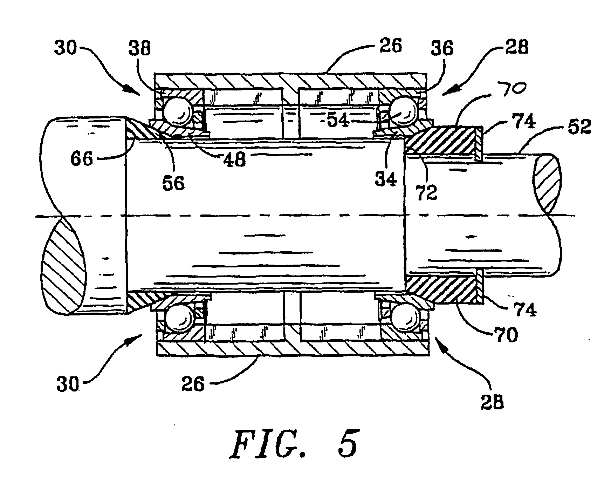

Figure 3 illustrates a second embodiment of the present construction including an optional wedge-shaped isolator 56, formed of elastomeric polymer, between the bearing inner ring 48 and the annular shoulder 58 of a shaft 60. The annular shoulder 58 and the radial surface engaging wedge-shaped isolator 56 to force the point of the wedge between the bearing inner ring 48 and shaft 60 to centre the shaft and present contact between angular contact bearing 30 and the shaft. This isolation of the shaft 60 provides further reduction of transmitted noise and vibration to or from the shaft. Other elements of this embodiment are similar to those of the first embodiment.

The mounting member 32 is shown in its undeformed cylindrical sleeve configuration 62 in Figure 4.

Figure 5 illustrates a third embodiment similar to the second embodiment and including the wedge-shaped isolator 56. A shaft 60 has an annular shoulder 66 similar to the annular shoulder 58 and includes a reduced diameter portion forming step 60 located radially inwardly of the bearing inner ring 34. The step 72 allows mounting ring 70 to have a thicker radial section than the mounting ring 32 while providing a wedge-shaped portion for engaging a radially outwardly tapered surface of the bearing inner ring 34. When held by a snap ring 74 as shown, the mounting ring 70 is axially compressed and resiliently spread radially outwardly to provide a preload on the angular contact bearings 28 and 30. Although other elastomeric polymers may be used, urethane is particularly suited as a material for this use because it is not readily compressible but resiliently deforms within changing its volume and without creep or relaxation under load. When the mounting member 32 or 70 is "compressed axially", as described above, the volume remains substantially the same as it is deformed radially outwardly while maintaining contact with the shaft. As a result of this resilient deformation, a desired torque-to-rotate is maintained with less variation than can be obtained with known mounting arrangements while accommodating large axial displacements of the shaft and housing.

It will be appreciated that the present construction provides substantial improvements with respect to reduction of noise and vibration and maintenance of uniform torque-to-rotate of the shaft relative to the housing, making it ideal for mounting automotive tilt steering columns. In addition, the present construction requires fewer parts than known mounting arrangements, resulting in simpler assembly and requires less axial space.

## Claims

1. A method of mounting a shaft (24) within a housing (26), the method comprising mounting an angular contact bearing (28) within the housing, the angular contact bearing having bearing balls (54) between a bearing outer ring (36) and a bearing inner ring (34), the annular contact bearing having an axis; and positioning a shaft (24) within the bearing inner ring such that an annular space is provided between the bearing inner ring and the shaft; **characterised by** positioning a mounting ring (32) formed of elastomeric polymer over the shaft (24) and against the bearing inner ring (34) such that a portion of the mounting ring is within the annular space between the bearing inner ring and the shaft such that the bearing inner ring (34) is spaced from and in a non-contact position relative to the shaft (24), thereby centring the shaft within the bearing inner ring and reducing radial free play of the shaft with respect to the bearing inner ring; and compressing the mounting ring (32) axially, against the bearing inner ring (34), such that the mounting ring deforms and resiliently spreads radially outwardly and provides a preload on the bearing balls (54).

2. A method according to claim 1, wherein the bearing inner ring (34) has an outwardly tapered radially inner surface corresponding to an outwardly tapered radially outward surface of the portion of the mounting ring (32) between the bearing inner ring and the shaft (24) such that positioning the mounting ring within the annular space between the bearing inner ring and the shaft is facilitated.

3. A method according to claim 1 or 2, further comprising mounting of a second angular contact bearing (30) within the housing (26), the second angular contact bearing having bearing balls (54), and being engageable with a stop surface (58) on the shaft such that the axial compression of the mounting ring (32) provides a preload on the bearing balls (54) of the second angular contact bearing.

4. A method according to claim 3, further comprising positioning a wedge-shaped isolator (56) formed of elastomeric polymer between the shaft (60) and the second angular contact bearing (30) and engageable with the stop surface on the shaft, thereby facilitating centring of the shaft and reducing radial free play of the shaft with respect to the second angular contact bearing.

5. A method according to any one of the preceding claims, wherein the mounting ring (32) is formed of urethane.

6. An assembly comprising a housing (26), an angular contact bearing (28) having bearing balls (54) between a bearing outer ring (36) and a bearing inner ring (34), the bearing outer ring being mounted within the housing, the bearing inner ring having a central annular aperture; there being a shaft (24) located concentrically within the central annular aperture of the bearing inner ring such that an annular space is provided between the bearing inner ring and the shaft and there being stop means (50) mounted on the shaft; **characterised by** a mounting ring (32), formed of elastomeric polymer, having a portion located within the annular space between the bearing inner ring (34) and the shaft (24) such that the bearing inner ring (34) is spaced from and in a non-contact position relative to the shaft (24), the mounting ring being compressed axially between the bearing inner ring and the stop means (50) such that the mounting ring is resiliently spread radially outwardly and a preload is exerted on the bearing balls.

7. An assembly according to claim 6, wherein the central annular aperture of the bearing inner ring (34) has an outwardly tapered radially inner surface corresponding to an outwardly tapered radially outward surface of the portion of the mounting ring (32), between the bearing inner ring and the shaft (24).

8. An assembly according to claim 6 or 7, further comprising a second angular contact bearing (30) mounted within the housing and a stop surface (58) on the shaft, the second angular contact bearing abutting the stop surface and having bearing balls (54) preloaded by the axially compressed mounting ring.

9. An assembly according to claim 7, further comprising a wedge-shaped isolator (56) formed of elastomeric polymer between the shaft (24) and the second angular contact bearing (30) and abutting the stop surface (58) on the shaft such that centring of the shaft and reducing radial free play of the shaft with respect to the second angular contact bearing are facilitated.

10. An assembly according to claim 6, 7, 8 or 9, wherein the mounting ring (32) is formed of urethane.

11. An assembly according to any one of claims 6 to 10, wherein the shaft (52) has a reduced diameter portion forming a step (72) located radially inwardly of the bearing inner ring (34) and wherein the mounting ring (70) is located on the reduced diameter portion and against the step.

## Patentansprüche

1. Verfahren zum Montieren einer Welle (24) innerhalb eines Gehäuses (26), wobei das Verfahren das Montieren eines Schrägkugellagers (28) innerhalb des Gehäuses umfasst, wobei das Schrägkugellager Lagerkugeln (54) zwischen einem äußeren Lagerring (36) und einem inneren Lagerring (34) hat, wobei das Schrägkugellager eine Achse hat, und Anordnen einer Welle (24) innerhalb des inneren Lagerrings derart, dass ein ringförmiger Raum zwischen dem inneren Lagerring und der Welle geschaffen wird, **gekennzeichnet durch** Anordnen eines Montagerings (32), der aus einem elastomeren Polymer geformt ist, über der Welle (24) und gegen den inneren Lagerring (34) derart, dass ein Teil des Montagerings innerhalb des ringförmigen Raums zwischen dem inneren Lagerring und der Welle ist, so dass der innere Lagerring (34) von der Welle (24) beabstandet und in einer nicht berührenden Stellung relativ zu dieser ist, wodurch die Welle innerhalb des inneren Lagerrings zentriert wird und freies radiales Spiel der Welle in Bezug auf den inneren Lagerring vermindert wird, und axiales Zusammendrücken des Montagerings (32) gegen den inneren Lagerring (34) derart, dass der Montagering sich verformt und sich elastisch radial nach außen aufweitet und eine Vorspannung auf die Lagerkugeln (54) ausübt.

2. Verfahren nach Anspruch 1, bei dem der innere Lagerring (34) eine nach außen abgeschrägte, radial innere Oberfläche hat, die einer äußeren abgeschrägten, radial äußeren Oberfläche des Teils des Montagerings (32) zwischen dem inneren Lagerring und der Welle (24) entspricht, so dass das Einführen des Montagerings innerhalb des ringförmigen Raums zwischen dem inneren Lagerring und der Welle erleichtert wird.

3. Verfahren nach Anspruch 1 oder 2, das ferner das Montieren eines zweiten Schrägkugellagers (30) innerhalb des Gehäuses (26) umfasst, wobei das zweite Schrägkugellager Lagerkugeln (54) hat und mit einer Anschlagoberfläche (58) an der Welle in Eingriff bringbar ist, so dass das axiale Zusammendrücken des Montagerings (32) eine Vorspannung auf die Lagerkugeln (54) des zweiten Schrägkugellagers ausübt.

4. Verfahren nach Anspruch 3, das ferner das Anordnen eines keilförmigen, aus einem elastischen Polymer geformten Isolierglieds (56) zwischen der Welle (60) und dem zweiten Schrägkugellager (30) aufweist und das mit der Anschlagoberfläche an der Welle in Eingriff bringbar ist, wodurch das Zentrieren der Welle erleichtert wird und radiales freies Spiel der Welle in Bezug auf das zweite Schrägkugellager vermindert wird.

5. Verfahren nach irgendeinem der vorhergehenden Ansprüche, bei dem der Montagering (32) aus Urethan geformt ist.

6. Anordnung mit einem Gehäuse (26), einem Schrägkugellager (28), das Lagerkugeln (54) zwischen einem äußeren Lagerring (36) und einem inneren Lagerring (34) hat, wobei der äußere Lagerring innerhalb des Gehäuses montiert ist, wobei der innere Lagerring eine zentrale ringförmige Öffnung hat, wobei eine Welle (24) konzentrisch innerhalb der zentralen ringförmigen Öffnung des inneren Lagerrings derart angeordnet ist, dass ein ringförmiger Raum zwischen dem inneren Lagerring und der Welle geschaffen ist, und wobei ein Anschlagmittel (50) auf der Welle montiert ist, **gekennzeichnet durch** einen Montagering (32), der aus einem elastomeren Polymer geformt ist, der einen Teil hat, der innerhalb des ringförmigen Raums zwischen dem inneren Lagerring (34) und der Welle (24) angeordnet ist, so dass der innere Lagerring (34) mit Abstand von und in einer nicht berührenden Stellung relativ zu der Welle (24) angeordnet ist, wobei der Montagering axial zwischen dem inneren Lagerring und dem Anschlagmittel (50) zusammengedrückt ist, so dass der Montagering nachgiebig radial nach außen aufgeweitet ist und eine Vorspannung auf die Lagerkugeln ausgeübt wird.

7. Anordnung nach Anspruch 6, bei der die zentrale ringförmige Öffnung des inneren Lagerrings (34) eine nach außen abgeschrägte, radial innere Oberfläche hat, die einer äußeren abgeschrägten, radial äußeren Oberfläche des Teils des Montagerings (32) zwischen dem inneren Lagerring und der Welle (24) entspricht.

8. Anordnung nach Anspruch 6 oder 7, die ferner ein zweites Schrägkugellager (30) aufweist, das innerhalb des Gehäuses montiert ist, sowie eine Anschlagoberfläche (58) an der Welle, wobei das zweite Schrägkugellager an der Anschlagoberfläche anliegt und Lagerkugeln (54) hat, die durch den axial zusammengedrückten Montagering vorgespannt sind.

9. Anordnung nach Anspruch 7, die ferner ein keilförmiges, aus einem elastomeren Polymer geformtes Isolierglied (56) zwischen der Welle (24) und dem zweiten Schrägkugellager (30) aufweist und das an der Anschlagoberfläche (58) an der Welle anliegt, so dass ein Zentrieren der Welle und ein Vermindern eines radialen freien Spiels der Welle in Bezug auf das zweite Schrägkugellager erleichtert sind.

10. Anordnung nach Anspruch 6, 7, 8 oder 9, bei der der Montagering (32) aus Urethan geformt ist.

11. Anordnung nach irgendeinem der Ansprüche 6 bis 10, bei der die Welle (52) einen Abschnitt mit vermindertem Druchmesser hat, der eine Stufe (72) bildet, die radial innerhalb des inneren Lagerrings (34) liegt, und wobei der Montagering (70) auf dem Abschnitt mit vermindertem Durchmesser und gegenüber der Stufe angeordnet ist.

## Revendications

1. Procédé permettant de monter un arbre (24) dans un carter (26), le procédé comprenant les étapes consistant à monter un roulement à contact angulaire (28) dans le carter, le roulement à contact angulaire ayant des billes (54) de roulement entre une bague externe (36) de roulement et une bague interne (34) de roulement, le roulement à contact annulaire ayant un axe ; et positionner un arbre (24) dans la bague interne de roulement de sorte qu'un espace annulaire est prévu entre la bague interne de roulement et l'arbre ; **caractérisé par** l'étape consistant à positionner une bague de montage (32) formée avec un polymère élastomère sur l'arbre (24) et contre la bague interne (34) de roulement de sorte qu'une partie de la bague de montage est dans l'espace annulaire entre la bague interne de roulement et l'arbre, de sorte que la bague interne (34) de roulement est espacée de et en position sans contact par rapport à l'arbre (24), centrant ainsi l'arbre dans la bague interne de roulement et réduisant le jeu libre radial de l'arbre par rapport à la bague interne de roulement ; et comprimer la bague de montage (32) de manière axiale contre la bague interne (34) de roulement de sorte que la bague de montage se déforme et s'étend de manière élastique et radiale vers l'extérieur et propose une précharge sur les billes (54) de roulement.

2. Procédé selon la revendication 1, dans lequel la bague interne (34) de roulement possède une surface radialement interne progressivement rétrécie vers l'extérieur correspondant à une surface radialement externe progressivement rétrécie vers l'extérieur de la partie de la bague de montage (32) entre la bague interne de roulement et l'arbre (24) de sorte que l'étape consistant à positionner la bague de montage dans l'espace annulaire entre la bague interne de roulement et l'arbre est facilitée.

3. Procédé selon la revendication 1 ou 2, comprenant en outre l'étape consistant à monter un second roulement à contact angulaire (30) dans le carter (26), le second roulement à contact angulaire étant doté de billes (54) de roulement, et pouvant être mis en prise avec une surface de butée (58) sur l'arbre de sorte que la compression axiale de la bague de montage (32) propose une précharge sur les billes (54) de roulement du second roulement à contact angulaire.

4. Procédé selon la revendication 3, comprenant en outre l'étape consistant à positionner un isolateur (56) en forme de coin formé avec un polymère élastomère entre l'arbre (60) et le second roulement à contact angulaire (30) et pouvant être mis en prise avec la surface de butée sur l'arbre, facilitant ainsi le centrage de l'arbre et réduisant le jeu radial libre de l'arbre par rapport au second roulement à contact angulaire.

5. Procédé selon l'une quelconque des revendications précédentes, dans lequel la bague de montage (32) est fabriquée à partir d'uréthane.

6. Ensemble comprenant un carter (26), un roulement à contact angulaire (28) ayant des billes (54) de roulement entre une bague externe (36) de roulement et une bague interne (34) de roulement, la bague externe de roulement étant montée dans le carter, la bague interne de roulement ayant une ouverture annulaire centrale ; on trouve à cet endroit là un arbre (24) positionné de manière concentrique dans l'ouverture annulaire centrale de la bague interne de roulement de sorte que l'on propose un espace annulaire entre la bague interne de roulement et l'arbre et on trouve à cet endroit là des moyens de butée (50) montés sur l'arbre ; **caractérisé par** une bague de montage (32) formée avec un polymère élastomère, ayant une partie située dans l'espace annulaire entre la bague interne (34) de roulement et l'arbre (24) de sorte que la bague interne (34) de roulement est espacée de et dans une position sans contact par rapport à l'arbre (24), la bague de montage étant comprimée de manière axiale entre la bague interne de roulement et les moyens de butée (50) de sorte que la bague de montage s'étend de manière élastique radialement vers l'extérieur et qu'une précharge est exercée sur les billes de roulement.

7. Ensemble selon la revendication 6, dans lequel l'ouverture annulaire centrale de la bague interne (34) de roulement a une surface radialement interne progressivement rétrécie vers l'extérieur correspondant à une surface radialement externe progressivement rétrécie vers l'extérieur de la partie de la bague de montage (32) entre la bague interne de roulement et l'arbre (24).

8. Ensemble selon la revendication 6 ou 7, comprenant en outre un second roulement à contact angulaire (30) monté dans le carter et une surface de butée (58) sur l'arbre, le second roulement à contact angulaire venant en butée contre la surface de butée et ayant des billes (54) de roulement qui sont préchargées par la bague de montage axialement comprimée.

9. Ensemble selon la revendication 7, comprenant en outre un isolateur (56) en forme de coin fabriqué à partir d'un polymère élastomère entre l'arbre (24) et le second roulement à contact angulaire (30) et venant en butée contre la surface de butée (58) sur l'arbre de sorte que le centrage de l'arbre et la réduction du jeu radial libre de l'arbre par rapport au second roulement à contact angulaire sont facilités.

10. Ensemble selon la revendication 6, 7, 8 ou 9, dans lequel la bague de montage (32) est fabriquée à partir d'uréthane.

11. Ensemble selon l'une quelconque des revendications 6 à 10, dans lequel l'arbre (52) a une partie de diamètre réduit formant une marche (12) située radialement vers l'intérieur de la bague interne (34) de roulement et dans lequel la bague de montage (70) est située sur la partie de diamètre réduit et contre la marche.
